Europäisches Patentamt

European Patent Office

Office européen des brevets

(11) Publication number: **0 549 182 A2**

# EUROPEAN PATENT APPLICATION

(21) Application number: **92311190.0**

(22) Date of filing: **09.12.92**

(51) Int. Cl.5: **G06F 15/72**

(30) Priority: **23.12.91 US 812395**

(43) Date of publication of application:
**30.06.93 Bulletin 93/26**

(84) Designated Contracting States:
**DE GB**

(71) Applicant: **GENERAL ELECTRIC COMPANY**
**1 River Road**
**Schenectady, NY 12345(US)**

(72) Inventor: **Cline, Harvey Ellis**
**845 Harris Avenue**
**Schenectady, New York 12309(US)**
Inventor: **Lorensen, William Edward**
**14 Hearthside Drive**
**Ballston Lake, New York 12019(US)**
Inventor: **Ludke, Siegwalt**
**10 Dawn Drive**
**Scotia, New York 12302(US)**

(74) Representative: **Lupton, Frederick**
**LONDON PATENT OPERATION, G.E.**
**TECHNICAL SERVICES Co. INC., Essex**
**House, 12/13 Essex Street**
**London WC2R 3AA (GB)**

(54) **Apparatus and method for displaying surgical cuts in three-dimensional models.**

(57) A graphics workstation displays three-dimensional images from surface models generated with computer aided design (CAD) software or from three-dimensional volumetric data. A model clipping circuit determines points which are to be displayed, corresponding to a desired model clip box. The points may be inside or outside the clip box. A rotate circuit transforms a point and normal display list according to the desired orientation, and also converts the normal vectors into levels of shading according to the direction of each normal vector relative to the desired orientation. The points in the transformed display list are clipped to a desired screen viewing region by a screen clipping circuit. An AND circuit allows update of the depth buffer and an image memory buffer for points which do not lie behind other surfaces. The image buffer memory buffer is a screen map, displayed on a monitor. The models are cut and displayed much more rapidly on a low power workstation than would be possible using conventional methods.

Fig. 1

CROSS REFERENCE TO RELATED APPLICATIONS

This application is related to applications *System For 3D Scan Conversion of A Polygonal Model Into A Point and Normal Format, Displayed Utilizing an Accelerator Circuit,* Ser. No. (Docket No. RD-21,024), *System For Displaying Solid Cuts For Surfaces of Solid Models* by William E. Lorensen, Harvey E. Cline, Bruce Teeter, and Siegwalt Ludke, Ser. No. (Docket No. RD-21,165), and *Solid Models Generation By Span Method Using Dividing Cubes,* by Harvey E. Cline, and William E. Lorensen, Ser. No. (Docket No. RD-21,335) all filed simultaneously with this application, and all assigned to the present assignee.

BACKGROUND OF THE INVENTION

1. Field of the Invention

The present invention relates to a three-dimensional (or 3D) graphics workstation and more specifically a three-dimensional graphics workstation which displays cut surfaces of a 3D model as a solid.

2. Description of Related Art

Conventional computer graphic methods display polygonal models by first transforming the model into a wireframe. A wireframe is a network of lines connecting the vertices of a polygonal model. The wireframe is then projected onto the image plane. The intensity of the vertex pixels is calculated to create an image resembling a solid shaded 3D object. This intensity, at a desired pixel, is proportional to the component of a vector normal to the surface which is parallel to the direction of simulated impinging light.

Surfaces which lie behind other surfaces are hidden. Usually a depth buffer, being a memory element, is used to store the present depth of each pixel in the 3D image so that only the visible surfaces are displayed. The depths of subsequent pixels are compared to the present depths of pixels in the depth buffer. The depth buffer is updated when a pixel having a shallower depth is encountered. For additional details, see *Fundamentals of Interactive Computer Graphics* by Foley and Van Dam, Addison-Wesley Press 1982, chapter 8, pages 267-318.

Structures in a model may be manipulated by being rotated and and cut in various planes. Transformations of coordinates by multiplication with a 4x4 matrix equation are used to rotate the model. After transformation, the transformed model is displayed.

The polygonal models may be generated by conventional CAD/CAM methods or from volume data as described in the "marching cubes" method of U.S. Patent 4,710,876, *System and Method for the Display of Surface Structures Contained Within the Interior Region of a Solid Body* by Harvey E. Cline and William E. Lorensen issued Dec. 1, 1987, assigned to the present assignee and hereby incorporated by reference. The volume data is obtained from conventional 3D imaging systems such as Magnetic Resonant Imaging (MRI), Computed Axial Tomography (CAT), Positron Emission Tomography (PET) etc.

Another method of displaying models is described in U.S. Patent 4,719,585, *Dividing Cubes System and Method for the Display of Surface Structures Contained Within the Interior Region of a Solid Body* by Harvey E. Cline, Siegwalt Ludke, and William E. Lorensen, issued Jan. 12, 1988, ("Dividing Cubes") assigned to the present assignee and incorporated by reference.

The method begins with volume data and creates a surface described by a number of points and normals vectors associated with each point, rather than polygons. The "dividing cubes" method has been used to display surfaces contained within volume medical data.

Images produced by conventional methods currently do not allow a user to cut away sections of a model and display underlying surfaces for examination. The ability to cut away sections of a model to reveal underlying structures would be a useful tool in simulating surgery, especially if the device is capable of manipulating the models and displaying the image quickly.

SUMMARY OF THE INVENTION

The invention is set forth in Claims 1 and 6.

A feature of the present invention is to provide a three-dimensional display system for a graphic workstation capable of removing a predetermined volume from a model of an object, and displaying the remaining portions of the model.

Another feature of the invention is to provide a method and apparatus for manipulation of surface models on a low-power workstation with minimal processing time.

Another feature of the invention is to provide a workstation that is capable of manipulating and displaying CAD/CAM, polygonal and volume data models.

The graphics workstation is capable of manipulating models from computer aided design or volume data with the aid of a custom accelerator circuit, employs a surface generator that converts the model or volume data to a point and normal display list. A user selects a clip box in which to cut the model, a region to be displayed being either the region inside the clip box or the region outside the clip box, a three-dimensional orientation of the model, and screen cut planes which define a workstation viewing region through the use of input devices. A model clipping circuit creates a signal indicating points inside the clip box. An inversion circuit receives the desired display region from the input device and inverts the signal from the model clipping circuit if the desired region is outside the clip box. A rotate circuit rotates the point and normal vectors in the point and normal display list and determines shading based upon the orientation of the normal vector at each point. A screen clipping circuit determines points within a region defined by screen cut planes. A display circuit displays a three-dimensional image of multiple surfaces that are within the desired display region and the screen cut planes. The workstation is capable of displaying the models as shaded three-dimensional solid surfaces redrawn at a rate of several times per second on a low power graphics workstation, allowing nearrealtime manipulation.

## BRIEF DESCRIPTION OF THE DRAWINGS

The features of the invention believed to be novel are set forth with particularity in the appended claims. The invention itself, however, both as to organization and method of operation, together with further objects and advantages thereof, may best be understood by reference to the following description taken in conjunction with the accompanying drawing in which:

Fig. 1
is a simplified block diagram of the system of the present invention.

Fig. 2
is an illustration of a model to be displayed intersecting a model clip box and a screen clip box.

Fig. 3
is a simplified block diagram of the inversion circuit of the invention.

Fig. 4
is an illustration of the intersection of a model surface with the surface of the clip box according to the present invention.

Fig. 5
is an illustration of a model's surface with the portion of the surface within the clip box removed according to the invention.

Fig. 6
is a graphic image of a portion of a model's surface produced according to the invention, showing a region through the face of a subject removed.

Figs. 7a and 7b
together are a flow chart of the method of producing a three-dimensional image according to the invention.

## DETAILED DESCRIPTION OF THE INVENTION

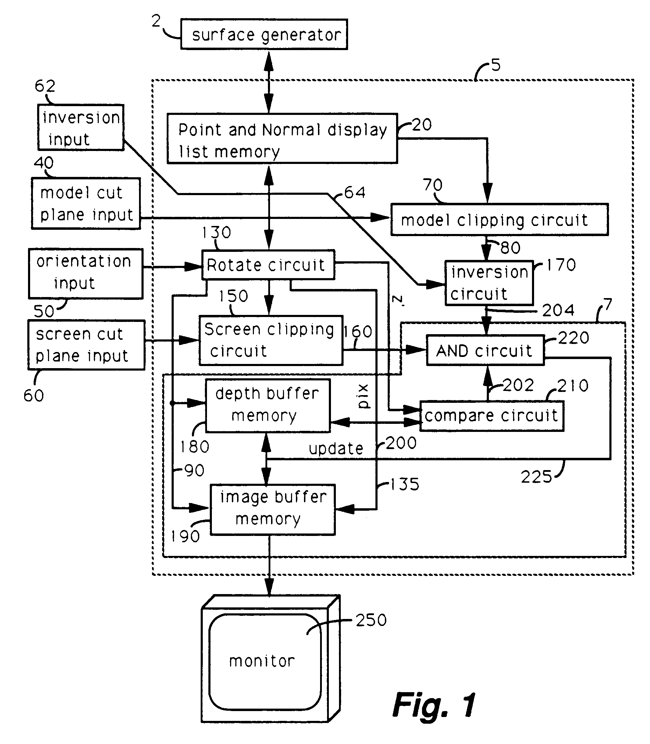

In Fig. 1, a surface generator 2 is shown for creating a point and normal display list from either a polygonal model supplied by a CAD/CAM system, or from volume data obtained from a system for providing three-dimensional imaging such as Positron Emission Tomography, Computed Axial Tomography, Magnetic Resonant Imaging, etc. The point and normal display list is comprised of points $(x,y,z)$ and normal vectors associated with each point $(n_x,n_y,n_z)$. The point and normal display list is stored in a point and normal display list memory 20 of an accelerator board 5.

Many elements of the accellerator board are similar to elements in U.S. Patent 4,985,834 *System and Method Employing Pipelined Parallel Circuit Architecture For Displaying Surface Structures of the Interior Region of a Solid Body* by Harvey E. Cline, Richard I. Hartley, Siegwalt Ludke and Sharbel E. Noujaim issued Jan. 15, 1991 assigned to the present assignee and hereby incorporated by reference.

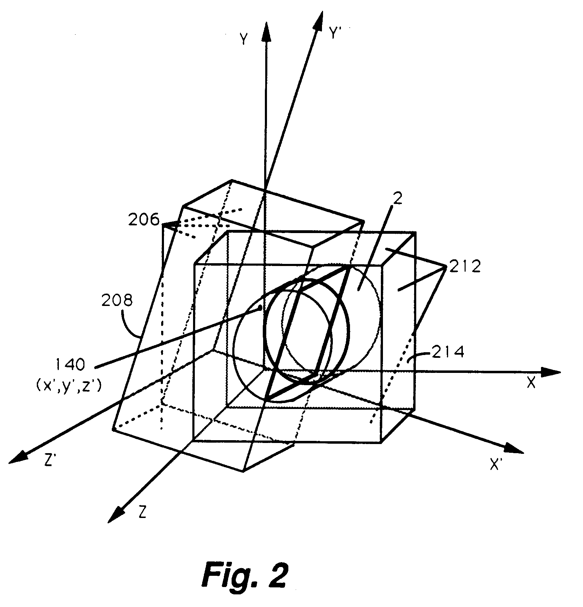

With reference now to Figs. 1 and 2, a user actuates an object cut plane input device 40 to select a set of model cut planes 206 through a model 2 to be displayed, the model cut planes 206 defining a model clip box 208. These planes are defined in reference to an X',Y',Z' coordinate system (model space) and remain the fixed with respect to model 2 throughout rotation of the model. The user may also utilize an inversion input device 62 to select a region inside or outside of clip box 208 to display. The user actuates an orientation input device 50 to select a three-dimensional orientation of model 2 in space, and actuates a screen cut plant input device 60 to select screen cut planes 212. The screen cut planes 212 remain fixed with respect to a monitor screen 250 and the X,Y,Z coordinate system (workstation space), but change relative to model 2 as the model is rotated. The parameters from input devices 40, 50, 60 and 62 are used to manipulate and display portions of the 3D model.

A model clipping circuit 70 receives the model clip box 208 parameters from input device 40 and compares each point $(x,y,z)$ in display list memory 20 to determine if it is within the model clip box. If a point $(x,y,z)$ lies within the model clip box 208, a line called a boxed line 80 connecting model clipping circuit 70 and an inversion circuit 170 is set 'high' by circuit 70. This indicates that point $(x,y,z)$ currently is inside the clip box. Inversion circuit 170 also receives the parameters of the selected region from inversion input device 62 and passes a along select line 204. The signal sent on select line 204 is the same as that on boxed line 80 if the inside of the clip box is selected; otherwise, inversion circuit 170 produces a signal which is the logical opposite of the received signal on line 80, changing 'high' signals to 'low' signals and *vice versa.*

A rotate circuit 130 receives the orientation input parameters from input device 50 and creates a 4X4 transformation matrix. Both the point $(x,y,z)$ and the normal vector $(n_x,n_y,n_z)$ are transformed by rotate circuit 130 to yield a transformed point $(x',y',z')$ 140 and a pixel intensity pix used for shading the image. Rotate circuit 130 transforms each point $(x,y,z)$ and normal vector $(n_x,n_y,n_z)$ according to the following equations:

$$x' = m_{11}x + m_{12}y + m_{13}z + m_{14}$$
$$y' = m_{21}x + m_{22}y + m_{23}z + m_{24}$$
$$z' = m_{31}x + m_{32}y + m_{33}z + m_{34}$$
$$pix = m_{41}n_x + m_{42}n_y + m_{43}n_z$$

where "$m_{11} \ldots m_{43}$" are matrix elements calculated to orient and translate the model and pix is the present calculated pixel intensity used to shade the surface. (Matrix element $m_{44}$ is 0.) Rotate circuit 130 passes the rotated coordinates $(x',y')$ along an address bus 90 to both a depth buffer memory 180 and an image buffer memory 190. The coordinates $(x',y')$ are used as an address for both memories. Rotate circuit 130 also passes the value pix to image buffer memory 190 through bus 135.

A screen clipping circuit 150 receives the screen cut planes 212 from input device 60 and creates a screen clip box 214 similar to the model clip box 208, but which is stationary with respect to monitor screen 250. The transformed point $(x',y',z')$ 140 is compared to screen clip box 214. If point $(x',y',z')$ 140 is within screen clip box 214, line 160 connecting screen clipping circuit 150 to AND circuit 220 is set 'high' by circuit 150.

A display circuit 7 displays an image exposed surfaces created from the transformed points within the desired region. The image resembles a solid object with superficial surfaces being visible and surfaces which lie behind the superficial surfaces being hidden. The display circuit is comprised of depth buffer memory 180, AND circuit 220, image buffer memory 190 and a compare circuit 210.

Compare circuit 210 receives a depth coordinate z' from rotate circuit 130 through a bus 200 and compares the depth z' with a present value in the depth buffer 180, at address $(x',y')$.

If the depth z' of the present point $(x',y',z')$ is closer to the viewer (i.e., has a smaller value) than the previous depth stored in depth buffer memory 180 at address $(x',y')$, then compare circuit 210 sets line 202 connected to AND circuit 220 'high'.

AND circuit 220 sets an 'update' line 225 connected to both the depth buffer memory 180 and the image buffer memory 190 'high' when it senses lines 160, 202 and 204 all being 'high', causing the pixel intensity pix to be stored at address $(x',y')$ of the image buffer memory. When update line 225 goes 'high', depth z' is stored at address $(x',y')$ of depth buffer memory, thereby updating the present depth at address $(x',y')$. After all points in the model have been processed, the image buffer memory is displayed as a shaded image on monitor screen 250.

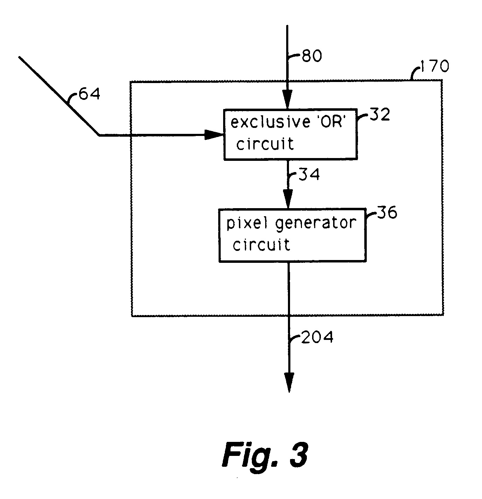

In Fig. 3, inversion circuit 170 of Fig. 1 is shown in greater detail. An exclusive 'OR' circuit 32 is coupled to model clipping circuit 70 of Fig. 1 by boxed line 80. Exclusive 'OR' circuit 32 also is coupled to inversion input device 62 of Fig. 1 by line 64. When line 64 is 'high' and line 80 is 'low', exclusive 'OR' circuit sets a line 34 'low'. Line 64 being 'high' indicates that the user selected the region outside the clip box to display. Line 80 being 'high' signifies that the point $(x',y',z')$ being processed is inside the clip box, therefore line 34 being 'low' signifies that this point $(x',y',z')$ will not be displayed, consistent with the user input. A pixel generator circuit 36 provides a signal on line 204 that is equivalent to that received on line 34 which is passed to AND circuit 220.

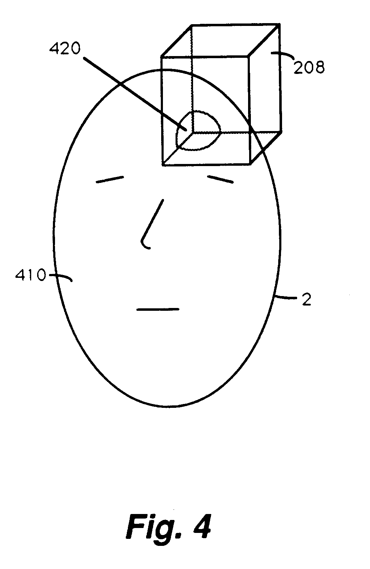

With respect to Fig 4, a model surface 2 is shown intersecting a clip box 208. The surface of intersection between model 2 and clip box 208 is shown as region 420. The present invention is capable of displaying only exposed surface points inside clip box 208, or displaying surface points 410 outside clip box 208 omitting points of surface 420 inside clip box 208.

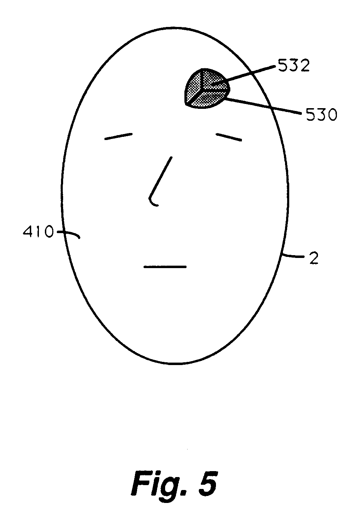

In Fig 5, surface points 410 outside the clip box are displayed, and a hole 530 is left in the model's surface where the clip box intersects the model surface. The structures 532 lying outside the clip box but within model 2 are visible as structures 532 inside of hole 530. This provides a means of cutting away a box region from the model to view inside the model, thereby simulating removal of surface 420 of Fig. 4 as would appear in surgery performed on model 2.

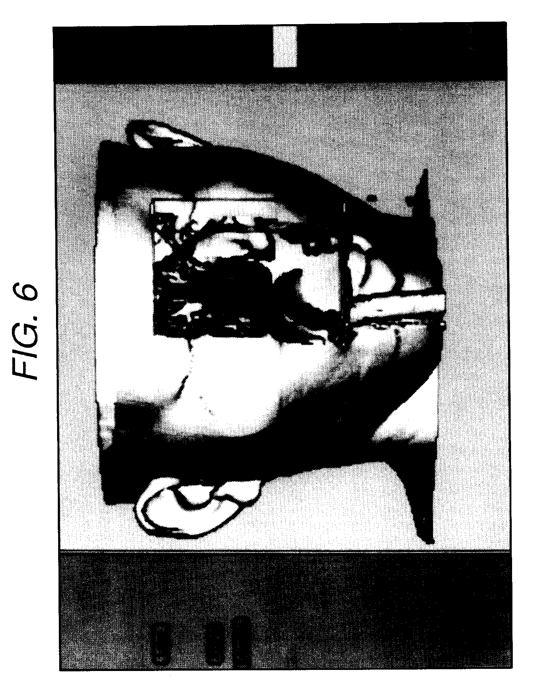

Fig. 6 shows an image of the head of a subject after removal of a region from the face by using actual data.

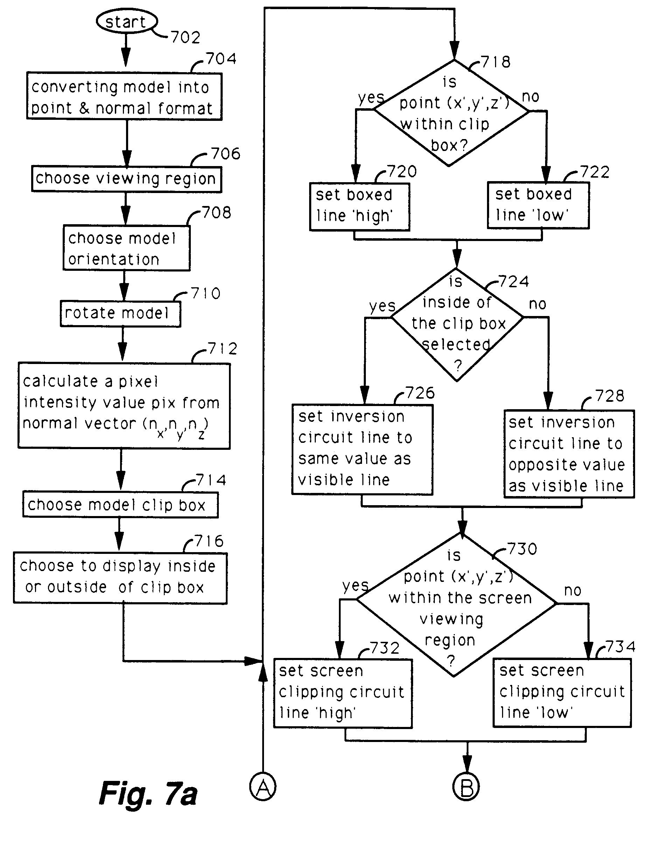

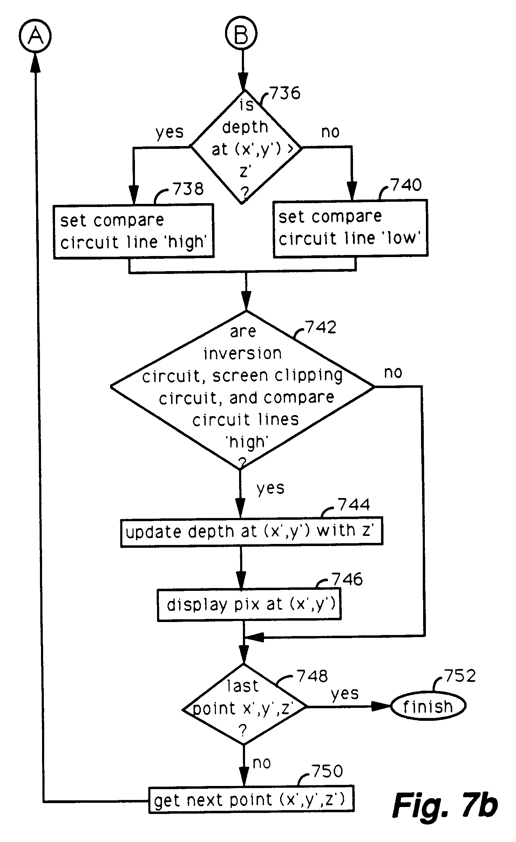

Figs. 7a and 7b, with points "A" connected to each other and points "B" connected to each other, make up a flow chart of the method employed for producing a three-dimensional image according to the present invention. The method begins at step 702. Models are converted to a point and normal display format at step 704. The user chooses a viewing region at step 706 and a model orientation at step 708. The model is rotated in step 710 according to the chosen model orientation to create a set of transformed points (x',y',z'). The pixel intensity value pix, being a component of the normal vector at point (x,y,z) parallel to the viewing angle, is calculated at step 712. The user also chooses a clip box which includes portions of the model to be displayed at step 714. The user then selects a region inside the clip box or outside the clip box to be displayed at step 716. At step 718, if point (x',y',z') is determined to be inside the clip box, a boxed line is set 'high' at step 720; otherwise, the boxed line is set 'low' at step 722. At step 724 if the inside of the clip box is selected to be displayed, a line called a select line is set to the same logical value as the boxed line at step 726. If the region outside the clip box is selected to be displayed, the select line is set to the logical opposite value as that of the boxed line at step 728. At step 730, if point (x',y',z') is determined to be within the screen viewing region defined by the screen cut planes, a screen clipping circuit line is set 'high' at step 732, and 'low' at step 734 if the point is determined not to be within the region. At step 736, if a stored depth at location (x',y') is determined to be greater than the z' coordinate, then a line called a depth line is set 'high' at step 738, otherwise the depth line is set 'low' at step 740. At step 742, the values of the boxed line, the select line, and the depth line are tested to determine if they are all 'high'. If they are all 'high', the value z' replaces the stored depth at location (x',y') at step 744, and intensity value pix is displayed on a screen at a location representing location (x',y') at step 746. If any one of the lines being compared at step 742 is 'low', then steps 744 and 746 are not executed, and processing continues at step 748. At step 748, if the points have not all been processed, the next point is chosen at step 750 and processing continues at step 718. If all of the points have been processed, then processing ends at step 752.

The results of the foregoing operation is an image in which surfaces that are not obscured by other surfaces when viewed from a selected viewing angle are displayed along with points on structures which are behind removed surfaces.

While several presently preferred embodiments of the invention have been described in detail herein, many modifications and variations will now become apparent to those skilled in the art. It is, therefore, to be understood that the appended claims are intended to cover all such modifications and variations as fall within the scope of the invention claimed.

**Claims**

1. A graphics workstation for manipulating structures in three-dimensional models comprising:

   a) a point and normal display list memory;

   b) a surface generator adapted to create a point and normal display list comprised of a set of surface points (x,y,z) and normal vectors $(n_x, n_y, n_z)$ from a surface of a model, the surface generator also being adapted to store the display list in the point and normal display list memory;

   c) a first input device for selecting model cut planes defining a model clip box;

   d) a second input device for defining a three-dimensional orientation of structures in said model;

   e) a third input device for defining a screen cut plane;

   f) a model clipping circuit coupled to said first input device for creating a visible signal indication of when a point (x,y,z) is within the model clip box defined by the first input device;

   g) a fourth input device for selecting a region to display, said region being either inside or outside of the model clip box;

   h) an inversion circuit coupled to said fourth input device for inverting the visible signal (???) when a region outside of the model clip box is selected for display;

   i) a rotate circuit coupled to said second input device for transforming each point (x,y,z) and normal vector $(n_x, n_y, n_z)$ in the display list according to the three-dimensional orientation provided by the second input device to a transformed point (x',y',z') having an address (x',y') and a depth z', and a normal vector value pix;

   j) a screen clipping circuit coupled to said third input device and adapted to produce a signal indicating when a transformed point (x',y',z') is within a region defined by screen cut planes provided by the third input device;

   k) a display circuit responsive to the signals produced by the inversion circuit, the screen clipping circuit, and the rotate circuit, said display circuit being adapted to form a three-dimensional (3D) image of multiple surfaces from transformed points (x',y',z') and the signal pix; and

   l) a display monitor for displaying the 3D image.

2. The graphics workstation of claim 1 wherein the display circuit comprises:

a) a depth buffer memory coupled to the rotate circuit for receiving an address (x',y') from the rotate circuit and storing a depth at address (x',y');

b) a compare circuit coupled to the rotate circuit and the depth buffer memory, said compare circuit being adapted to compare the depth stored in address (x',y') of the depth buffer memory to the depth z' provided by the rotate circuit and to produce a signal indicating whether depth z' is closer to the user than the present depth stored in the depth buffer memory, and if the depth z' is closer to the user, send the depth z' to the depth buffer memory at address (x',y');

c) an AND circuit having its inputs coupled to the inversion circuit, the screen clipping circuit, and respectively, and having its output coupled to said depth buffer memory, said AND circuit being adapted to the compare circuit, produce a signal indicating when point (x',y',z') is within the regions defined by both the inversion circuit and the screen clipping circuit and has a depth z' less than the depth in the depth buffer memory at address (x',y'), thereby updating the depth buffer memory; and

d) an image buffer memory having an address corresponding to each point of the display monitor, the image buffer memory being coupled to the rotate circuit and the AND circuit, said image buffer memory being adapted to receive the address (x',y'), the value indicating the pixel intensity pix, and the update signal created by the AND circuit, and further adapted to store the value pix at address (x',y') creating an image to be displayed on the monitor.

3. The graphics workstation of claim 1 including a three-dimensional imaging apparatus coupled thereto and comprising one of the group consisting of a positron emission tomography system, a magnetic resonant imaging system, a computerized axial tomography system, a three-dimensional ultrasound system, and a three-dimensional RADAR system, for providing volumetric data to define said surface model.

4. The graphics workstation of claim 1 including a conventional computer aided design/computer aided manufacturing system, for providing a polygonal model comprised of polygons and normal vectors to define said surface model.

5. The graphics workstation of claim 1 wherein the inversion circuit inverts the visible signal by executing the steps of:

a) receiving a signal from the fourth input device defining a selected region as being either inside the clip box or outside the clip box;

b) receiving the visible signal from the model clipping circuit; and

c) creating a signal being the logical opposite of the visible signal if the selected region is outside of the clip box, and creating a signal being the same as the visible signal if the selected region is inside of the clip box.

6. A method of producing a three-dimensional graphic image of structures in a model comprising the steps of:

a) converting said model into surfaces defined by a set of surface points, each point having a unit vector associated with it pointing in a direction normal to the surface at that point;

b) selecting a screen viewing region;

c) selecting a model orientation;

d) rotating said model to the selected model orientation to obtain transformed points (x',y',z');

e) determining, at a visible surface point (x',y',z'), a component of a normal vector $(n_x, n_y, n_z)$ that is parallel to the selected viewing angle, and creating a signal pix representing the value of the component;

f) defining a model clip box;

g) selecting, as a region of the object to be displayed, either the region inside, or the region outside of the model clip box;

h) determining if each transformed point (x',y',z') is within the selected screen viewing region;

i) determining if each transformed point (x',y',z') is within the selected region of the model;

j) determining if the z' coordinate of each transformed point (x',y',z') is greater than a stored depth at location (x',y'); and

k) for each transformed point (x',y',z') that is within the selected screen viewing region, within the selected region of the model, and has a z' coordinate of greater than the last saved depth at location (x',y'), executing the steps of:

1. saving z' as a depth at location (x',y'), and

2. displaying pixel intensity pix at a screen location corresponding to location (x',y'), so as to produce an image.

7. The method of producing a three-dimensional graphic image of claim 6 wherein the step of converting said model into surfaces comprises the step of implementing the 'dividing cubes' method.

8. The method of producing a three-dimensional graphic image of claim 6 wherein the step of converting said model into surfaces comprises the steps of:
a) receiving a model in polygonal model format; and
b) scan converting the polygonal model into a set of point and normal data.

9. The method of producing a three-dimensional graphic image of claim 6 wherein the step of converting said model into surfaces comprises the steps of:
a) receiving a set of three-dimensional volume data; and
b) executing the 'marching cubes' method to produce a set of point and normal data defining said surface.

**Fig. 1**

**Fig. 2**

**Fig. 3**

**Fig. 4**

**Fig. 5**

FIG. 6

start —702

converting model into
point & normal format —704

choose viewing region —706

choose model
orientation —708

rotate model —710

calculate a pixel
intensity value pix from
normal vector $(n_x, n_y, n_z)$ —712

choose model clip box —714

choose to display inside
or outside of clip box —716

Ⓐ

—718
is
point (x',y',z')
within clip
box?
yes          no

set boxed
line 'high' —720

set boxed
line 'low' —722

—724
is
inside of
the clip box
selected
?
yes          no

set inversion
circuit line to
same value as
visible line —726

set inversion
circuit line to
opposite value
as visible line —728

—730
is
point (x',y',z')
within the screen
viewing
region
?
yes          no

set screen
clipping circuit
line 'high' —732

set screen
clipping circuit
line 'low' —734

Ⓑ

*Fig. 7a*

Fig. 7b